# DEMANDE DE BREVET EUROPEEN

(11) **EP 0 936 130 A1**
(43) Date de publication de la demande: **18.08.1999**
(21) Numéro de dépôt: 99400287.1
(22) Date de dépôt: 08.02.1999
(51) Int. Cl.: B62D 1/19

(54) **Arbre de direction télescopique notamment pour véhicule automobile**

(30) Priorité: 10.02.1998 FR 9801552
(71) Demandeur: ECIA - EQUIPEMENTS ET COMPOSANTS POUR L'INDUSTRIE AUTOMOBILE, F-25400 Audincourt (FR)
(72) Inventeur: Barneoud, Jean-Marc, 25350 Mandeure (FR); Ciciliani, Patrice, 25230 Seloncourt (FR); Maistre, Olivier, 90000 Belfort (FR); Prillard, Charles, 25420 Voujeaucourt (FR)
(74) Mandataire: Habasque, Etienne Joel Jean-François

(57) **Abrégé**

Cet arbre de direction télescopique notamment pour véhicule automobile, est caractérisé en ce qu'il comporte trois tronçons d'arbre (2,3,4) déplaçables à coulissement axial les uns par rapport aux autres, dont un premier tronçon d'arbre d'extrémité (2) monté déplaçable à coulissement par rapport à une première extrémité d'un tronçon d'arbre intermédiaire (3), dont une seconde extrémité est montée déplaçable à coulissement par rapport à un second tronçon d'arbre d'extrémité (4), pour permettre une rétraction de l'arbre (1) par emboîtement des deux tronçons d'arbre d'extrémité (2,4) l'un dans l'autre.

## Description

La présente invention concerne un arbre de direction télescopique notamment pour véhicule automobile.

On connaît déjà dans l'état de la technique, des arbres de direction télescopiques de ce type qui comportent deux tronçons d'arbre montés déplaçables à coulissement axial l'un dans l'autre.

De tels arbres de direction trouvent des applications principalement dans les véhicules automobiles.

Une de ces applications est le réglage en position axiale de l'ensemble de colonne et plus particulièrement du volant de direction.

Dans ce cas, des moyens de rattrapage des jeux de montage sont prévus entre les deux tronçons d'arbre.

Une telle structure d'arbre peut également être utilisée pour absorber des variations de côte liées aux modifications de géométrie de l'ensemble de direction du véhicule.

Une autre des applications de ce type d'arbres concerne l'absorption d'énergie de choc par contrôle des déplacements des deux tronçons d'arbre l'un par rapport à l'autre.

Dans ce cas, des moyens d'absorption d'énergie de choc par contrôle des déplacements des tronçons d'arbre l'un par rapport à l'autre sont interposés entre ceux-ci pour permettre une rétraction contrôlée de l'arbre de direction afin de réduire les risques de blessure du conducteur du véhicule.

Le but de l'invention est de proposer un arbre de direction qui remplisse ces deux fonctions tout en présentant un encombrement réduit.

A cet effet, l'invention a pour objet un arbre de direction télescopique notamment pour véhicule automobile, caractérisé en ce qu'il comporte trois tronçons d'arbre déplaçables à coulissement axial les uns par rapport aux autrès, dont un premier tronçon d'arbre d'extrémité monté déplaçable à coulissement par rapport à une première extrémité d'un tronçon d'arbre intermédiaire, dont une seconde extrémité est montée déplaçable à coulissement par rapport à un second d'arbre d'extrémité, pour permettre une rétraction de l'arbre par emboîtement des deux tronçons d'arbre d'extrémité l'un dans l'autre.

L'invention sera mieux comprise à l'aide de la description qui va suivre, donnée uniquement à titre d'exemple et faite en se référant aux dessins annexés, sur lesquels :
- les Figs.1 et 2 illustrent des vues en coupe de deux exemples de réalisation d'un arbre de direction télescopique selon l'invention;
- les Figs. 3 à 5 illustrent le fonctionnement d'un exemple de réalisation d'un tel arbre de direction;
- les Figs.6 et 7 représentent deux vues de détail illustrant deux modes de réalisation de moyens de rattrapage de jeux de montage utilisés dans un tel arbre; et
- les Figs.8,9 et 10 représentent trois vues de détail illustrant trois exemples de réalisation de moyens d'absorption d'énergie de choc utilisés dans un tel arbre de direction.

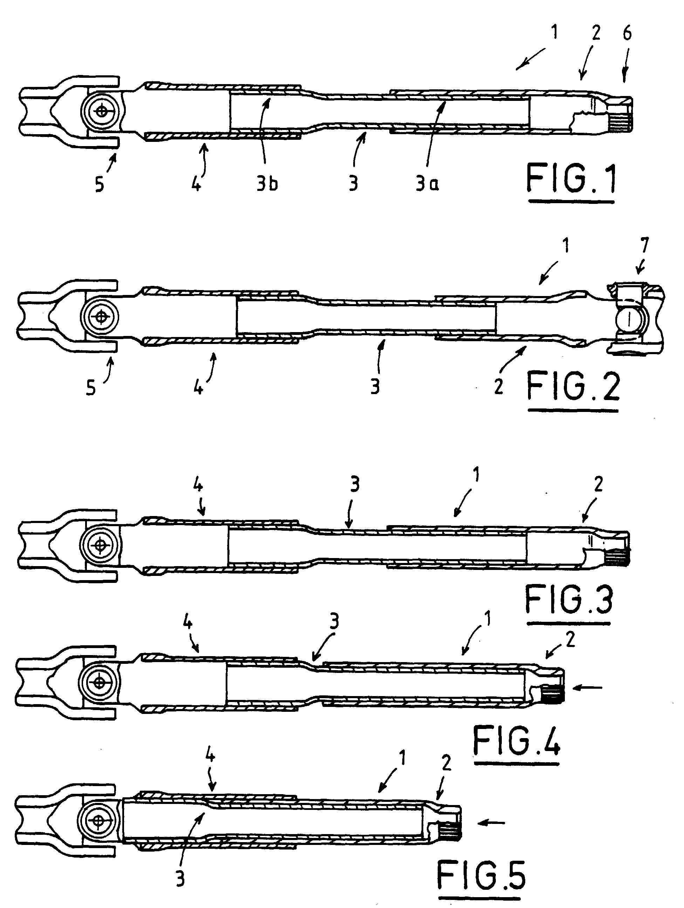

On reconnaît en effet sur les figures 1 et 2, un arbre de direction télescopique notamment pour véhicule automobile, désigné par la référence générale 1 sur ces figures.

En fait, cet arbre de direction comporte trois tronçons d'arbre déplaçables à coulissement axial les uns par rapport aux autres, dont un premier tronçon d'arbre d'extrémité, désigné par la référence générale 2, est déplaçable à coulissement par rapport à une première extrémité d'un tronçon d'arbre intermédiaire désigné par la référence générale 3, dont une seconde extrémité est montée déplaçable à coulissement par rapport à un second tronçon d'arbre d'extrémité, désigné par la référence générale 4, pour permettre, comme cela sera décrit plus en détail par la suite, une rétraction de l'arbre par emboîtement des deux tronçons d'arbre d'extrémité 2 et 4 l'un dans l'autre.

Dans les deux exemples de réalisation représentés sur ces figures 1 et 2, le second tronçon d'arbre d'extrémité 4 est associé à un mécanisme d'articulation à la cardan désigné par la référence générale 5, permettant de relier cet arbre au reste du mécanisme de direction du véhicule.

Selon le mode de réalisation représenté sur la figure 1, l'extrémité correspondante du premier tronçon d'arbre 2 est munie de moyens 6 de réception d'un volant de direction de type classique, tandis que selon le mode de réalisation représenté sur la figure 2, l'extrémité correspondante du premier tronçon d'arbre 2, est également associée à un autre mécanisme d'articulation à la cardan, désigné par la référence générale 7.

De plus, et dans les exemples décrits, le tronçon d'arbre intermédiaire 3 comporte à chacune de ses extrémités, une portée externe, par exemple 3a et 3b, dont l'une par exemple 3a est adaptée pour recevoir à coulissement le premier tronçon d'arbre d'extrémité 2 et dont l'autre, par exemple 3b, et adaptée pour être montée à coulissement dans le second tronçon d'arbre d'extrémité 4.

Il va de soi bien entendu que d'autres dispositions de ces différents tronçons d'arbre peuvent être envisagées.

Comme cela sera décrit plus en détail par la suite, des moyens de rattrapage des jeux de montage peuvent être interposés entre le tronçon d'arbre intermédiaire et l'un des tronçons d'arbre d'extrémité, tandis que des moyens d'absorption d'énergie de choc, par contrôle des déplacements de tronçons d'arbre l'un par rapport à l'autre, peuvent être interposés entre le tronçon d'arbre intermédiaire et l'autre des tronçons d'arbre d'extrémité.

On a illustré sur les figures 3 à 5, la rétraction d'un tel arbre.

La figure 3 illustre cet arbre en position déployée.

Sur la figure 4, on a illustré une première phase de rétraction de cet arbre, au cours de laquelle par exemple le premier tronçon d'arbre d'extrémité 2 coulisse autour du tronçon d'arbre intermédiaire 3.

Ainsi par exemple, si des moyens de rattrapage des jeux de montage sont prévus entre ce tronçon d'arbre d'extrémité 2 et le tronçon d'arbre intermédiaire 3, cette disposition permet par exemple à un utilisateur, de régler la position axiale du volant.

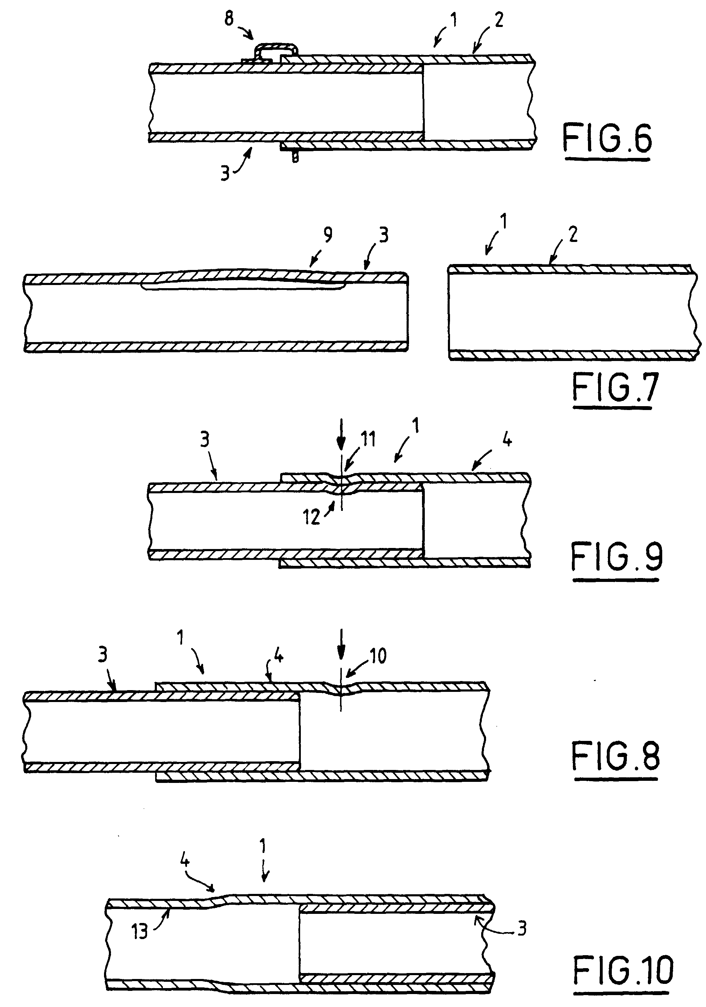

Sur la figure 5, on a illustré une seconde phase de rétraction de l'arbre de direction.

Lors de cette seconde phase, le tronçon d'arbre intermédiaire 3 coulisse à l'intérieur du second arbre d'extrémité 4, entraînant avec lui le premier tronçon d'arbre d'extrémité 2, ce qui permet donc une rétraction importante de l'arbre par emboîtement des deux tronçons d'arbre d'extrémité de celui-ci l'un dans l'autre.

On notera à cet égard que les différents tronçons d'arbre présentent des géométries et des dimensions complémentaires permettant cet emboîtement de ceux-ci les uns dans les autres.

Si des moyens d'absorption d'énergie de choc par contrôle des déplacements de tronçons d'arbre l'un par rapport à l'autre sont interposés entre le tronçon d'arbre intermédiaire et le second tronçon d'arbre d'extrémité, cette seconde phase de rétraction de l'arbre permet d'assurer une absorption d'énergie de choc.

On conçoit alors qu'avec une telle structure, on obtient un arbre de direction télescopique présentant une course de rétraction maximale qui peut être fractionnée en deux parties, l'une étant utilisée pour un réglage en position axiale du volant et l'autre étant utilisée pour absorber une énergie de choc, l'arbre présentant après rétraction complète une longueur extrêmement réduite.

Bien entendu, différentes dispositions relatives des tronçons d'arbre peuvent être envisagées.

On a indiqué précédemment que des moyens de rattrapage des jeux de montage pouvaient être interposés entre le tronçon d'arbre intermédiaire et l'un des tronçons d'arbre d'extrémité.

On a représenté sur les figures 6 et 7, deux exemples de réalisation de tels moyens de rattrapage des jeux.

C'est ainsi par exemple que sur la figure 6, on reconnaît l'arbre de direction 1, le premier tronçon d'arbre d'extrémité 2 et le tronçon d'arbre intermédiaire 3, les moyens de rattrapage des jeux de montage étant constitués dans cet exemple, par une rondelle en matériau élastique désignée par la référence générale 8.

Une telle rondelle peut présenter n'importe quelle structure appropriée connue dans l'état de la technique, fixée sur l'un des tronçons d'arbre, par exemple 2 et prenant appui sur l'autre, par exemple 3.

Sur la figure 7, on a représenté un autre exemple de réalisation de tels moyens de rattrapage qui se présentent dans ce cas sous la forme d'une languette élastique 9 découpée dans l'un des tronçons d'arbre et déformée en direction de l'autre.

Dans l'exemple décrit, cette languette 9 est découpée dans le tronçon d'arbre intermédiaire 3 et est déformée en direction du premier tronçon d'arbre d'extrémité 2.

Il va de soi bien entendu que d'autres modes de réalisation encore de ces moyens de rattrapage des jeux peuvent être envisagés comme par exemple un manchon en matière plastique interposé entre les deux tronçons d'arbre.

Les moyens d'absorption d'énergie de choc peuvent également présenter différentes formes comme cela est illustré sur les figures 8,9 et 10.

En effet, on connaît déjà dans l'état de la technique différents modes de réalisation de moyens d'absorption d'énergie de choc de ce type.

C'est ainsi par exemple que sur la figure 8, le second tronçon d'arbre d'extrémité 4 peut comporter une ou plusieurs déformations radiales dont l'une est désignée par la référence générale 10, permettant de freiner les déplacements du tronçon d'arbre intermédiaire 3 dans celui-ci.

Sur la figure 9, le second tronçon d'arbre d'extrémité 4 et le tronçon d'arbre intermédiaire 3 comportent des déformations complémentaires 11 et 12 permettant également de freiner les déplacements de ces pièces l'une par rapport à l'autre.

Enfin, sur la figure 10, le second tronçon d'arbre d'extrémité 4 comporte une zone de section réduite désignée par la référence générale 13, permettant également de freiner les déplacements du tronçon d'arbre intermédiaire 3 dans celui-ci.

Il va de soi bien entendu que d'autres modes de réalisation encore de ces moyens peuvent être envisagés.

On conçoit alors que l'arbre de direction selon l'invention présente un certain nombre d'avantages par rapport aux arbres de l'état de la technique, notamment au niveau de son encombrement réduit bien que permettant de remplir des fonctions de réglage et d'absorption d'énergie de choc.

## Revendications

1. Arbre de direction télescopique notamment pour véhicule automobile, caractérisé en ce qu'il comporte trois tronçons d'arbre (2,3,4) déplaçables à coulissement axial les uns par rapport aux autres, dont un premier tronçon d'arbre d'extrémité (2) monté déplaçable à coulissement par rapport à une première extrémité d'un tronçon d'arbre intermédiaire (3), dont une seconde extrémité est montée déplaçable à coulissement par rapport à un second tronçon d'arbre d'extrémité (4), pour permettre une rétraction de l'arbre par emboîtement des deux tronçons d'arbre d'extrémité (2,4) l'un dans l'autre.

2. Arbre selon la revendication 1, caractérisé en ce que des moyens (8;9) de rattrapage des jeux de montage sont prévus entre au moins l'un des tronçons d'arbre d'extrémité (2) et le tronçon d'arbre intermédiaire (3).

3. Arbre selon la revendication 1 ou 2, caractérisé en ce que des moyens (10;11,12;13) d'absorption d'énergie de choc par contrôle des déplacements de tronçons d'arbre, sont prévus entre au moins l'un des tronçons d'arbre d'extrémité (4) et le tronçon d'arbre intermédiaire (3).

4. Arbre selon l'une quelconque des revendications précédentes, caractérisé en ce qu'au moins l'un (4) des tronçons d'arbre d'extrémité est associé à un mécanisme d'articulation à la cardan (5).

5. Arbre selon l'une quelconque des revendications précédentes, caractérisé en ce que l'un des tronçons d'arbre d'extrémité (2) comporte des moyens (6) de réception d'un volant de direction du véhicule.

6. Arbre selon l'une quelconque des revendications précédentes, caractérisé en ce que le tronçon d'arbre intermédiaire (3) comporte à chacune de ses extrémités, une portée externe (3a,3b), dont l'une (3a) est adaptée pour recevoir à coulissement l'un (2) des tronçons d'arbre d'extrémité et dont l'autre (3b) est adaptée pour être montée à coulissement dans l'autre des tronçons d'arbre d'extrémité (4).
